# EUROPEAN PATENT APPLICATION

(11) **EP 3 333 101 A1**
(43) Date of publication of application: **13.06.2018**
(21) Application number: 17206800.9
(22) Date of filing: 12.12.2017
(51) Int. Cl.: B65G 47/08, B65G 47/82, B65G 57/24

(54) **TRANSPORT APPARATUS**

(30) Priority: 12.12.2016 JP 2016240545
(71) Applicant: Azbil Corporation, Chiyoda-ku Tokyo 100-6419 (JP)
(72) Inventor: KANEHARA, Keiji, Tokyo, 100-6419 (JP); MASUMOTO, Shingo, Tokyo, 100-6419 (JP); OKAWA, Yoichi, Tokyo, 100-6419 (JP); BEPPU, Hisashi, Tokyo, 100-6419 (JP)
(74) Representative: Lavoix

(57) **Abstract**

A transport apparatus includes a moving member, a shaft, a contact member, and an air damper. The moving member is moved along a table where an article is to be disposed. The shaft is rotatably connected to the moving member. The contact member is connected to the shaft and is to be brought into contact with the article. The air damper attenuates kinetic energy of the contact member and the shaft while the contact member and the shaft are being moved down toward the table.

## Description

### BACKGROUND OF THE INVENTION

### 1. Field of the Invention

The present invention relates to a transport technique and in particular relates to a transport apparatus.

### 2. Description of the Related Art

In order to transport articles out of a chamber, for example, a transport apparatus provided with a bar that pushes the articles is used (see, for example, Japanese Unexamined Patent Application Publication No. 2016-90075). In another transport apparatus, a bar is inserted, for example, from the front toward the rear of the chamber, thereby the articles are pushed out of the chamber (see, for example, U.S. Patent No. 7,695,230). While being inserted toward the rear of the chamber, the bar passes through a space above the articles. At the rear of the chamber, the bar is moved down to a level where the bar is able to be brought into contact with the articles and push the articles out of the chamber. A drive mechanism that changes the level of the bar includes, for example, a rack and pinion or a servomotor.

### SUMMARY OF THE INVENTION

However, with a rack and pinion, dust may be generated due to wear on the teeth of the rack. Furthermore, when the rack and pinion is washed by a liquid, the liquid is unlikely to easily drain from the tooth spaces of the rack because the tooth spaces are small. Thus, the contamination tends to remain in the rack. Accordingly, maintenance of the rack and pinion is difficult. When the drive mechanism for changing the level of the bar includes a motor and associated wiring, washing itself is difficult. Also in this case, the maintenance of the rack and pinion is difficult. Furthermore, when there is a break in the wiring, it becomes impossible to move up/down the bar.

Accordingly, one of objects of the present invention is to provide a transport apparatus in which problems are unlikely to occur when moving down a contact member such as a bar.

According to an aspect of the present invention, a transport apparatus is provided. The transport apparatus includes a moving member, a shaft, a contact member, and an air damper. The moving member is moved along a table where an article is to be disposed. The shaft is rotatably connected to the moving member. The contact member is connected to the shaft and is to be brought into contact with the article. The air damper attenuates kinetic energy of the contact member and the shaft while the contact member and the shaft are being moved down toward the table.

The above-described transport apparatus may further include an inhibiting mechanism and a dog. In this case, the inhibiting mechanism is provided in the moving member and inhibits rotation of the shaft so as to hold the contact member above the article, and the dog is brought into contact with the inhibiting mechanism at a specified position so as to release inhibition of the rotation of the shaft, the inhibition being performed by the inhibiting mechanism, thereby allowing the contact member to be moved down toward the table.

In the above-described transport apparatus, the shaft having been released from the inhibition of the rotation, the inhibition being performed by the inhibiting mechanism, may be rotated due to gravity applied to the shaft and the contact member.

In the above-described transport apparatus, the air damper may include a piston rod rotatably connected to the shaft and a cylinder that contains at least part of the piston rod. In this case, the piston rod is moved toward a closed end portion of the cylinder while the contact member and the shaft are being moved down toward the table. Furthermore, the cylinder may be rotatably connected to the moving member.

In the above-described transport apparatus, the air damper may include a cylinder rotatably connected to the shaft and a piston rod at least part of which is contained in the cylinder. In this case, a closed end portion of the cylinder is moved toward an end portion of the piston rod while the contact member and the shaft are being moved down toward the table. Furthermore, the piston rod may be rotatably connected to the moving member.

In the above-described transport apparatus, while an end portion of the piston rod is approaching or being approached by the closed end portion of the cylinder, a gas in the cylinder may flow out of the cylinder through an orifice between the piston rod and the cylinder.

In the above-described transport apparatus, a groove may be provided in a side surface of the piston rod.

In the above-described transport apparatus, a groove may be provided in a side wall of the cylinder.

In the above-described transport apparatus, while an end portion of the piston rod is approaching or being approached by the closed end portion of the cylinder, a gas in the cylinder may flow out of the cylinder through a hole provided in the piston rod.

In the above-described transport apparatus, while an end portion of the piston rod is approaching or being approached by the closed end portion of the cylinder, a gas in the cylinder may flow out of the cylinder through a hole provided in the cylinder.

In the above-described transport apparatus, a coefficient of linear expansion of the cylinder may be identical to a coefficient of linear expansion of the piston rod.

In the above-described transport apparatus, the moving member may be moved between a first position and a second position, and the dog may release the inhibiting mechanism while the moving member is being moved toward the first position. In this case, the dog may be fixed.

In the above-described transport apparatus, the inhibiting mechanism may inhibit the rotation of the shaft when the shaft is moved up to a specified position.

In the above-described transport apparatus, the inhibiting mechanism may include a first rotating member and a second rotating member. In this case, the first rotating member is rotated when the first rotating member is pushed by the dog, and the second rotating member becomes rotatable when the first rotating member is rotated. The shaft may be connected to a rotational shaft of the second rotating member.

In the above-described transport apparatus, the first rotating member may inhibit rotation of the second rotating member until the first rotating member is pushed by the dog.

In the above-described transport apparatus, the amount of rotation of the second rotating member that becomes rotatable may be larger than the amount of rotation of the first rotating member pushed by the dog.

In the above-described transport apparatus, a rotational angle regulator that regulates the rotational angle of the first rotating member may be further included.

The above-described transport apparatus may further include a bar-shaped member and a drive device. In this case, the bar-shaped member includes a magnetic body and is disposed parallel to the table, and the drive device rotates the bar-shaped member about a rotational axis of the bar-shaped member. The moving member may include a magnetic body, face part of a side surface of the bar-shaped member, and be moved along the bar-shaped member along with rotation of the bar-shaped member.

In the above-described transport apparatus, at least part of the bar-shaped member may be disposed in a chamber.

In the above-described transport apparatus, the chamber is a temperature controlled chamber having a space in which the article is to be disposed and the temperature of which is controlled.

In the above-described transport apparatus, the drive device may be disposed outside the chamber.

In the above-described transport apparatus, the drive device may be disposed outside the temperature controlled space.

In the above-described transport apparatus, the temperature controlled chamber may be a freeze drying chamber.

In the above-described transport apparatus, the article may include a pharmaceutical.

According to the present invention, the transport apparatus in which problems are unlikely to occur when moving down the contact member such as a bar can be provided.

### BRIEF DESCRIPTION OF THE DRAWINGS

Fig. 1 is a schematic top view of a transport apparatus according to a first embodiment;
Fig. 2 is a schematic side view of the transport apparatus according to the first embodiment;
Fig. 3 is a schematic side view of the transport apparatus according to the first embodiment;
Fig. 4 is a schematic top view of the transport apparatus according to the first embodiment;
Fig. 5 is a schematic side view of the transport apparatus according to the first embodiment;
Fig. 6 is a schematic side view of the transport apparatus according to the first embodiment;
Fig. 7 is a schematic top view of the transport apparatus according to the first embodiment;
Fig. 8 is a schematic side view of the transport apparatus according to the first embodiment;
Fig. 9 is a schematic top view of the transport apparatus according to the first embodiment;
Fig. 10 is a schematic side view of the transport apparatus according to the first embodiment;
Fig. 11 is a schematic view of a bar-shaped member and a moving member according to the first embodiment;
Fig. 12 is a schematic sectional view of an air damper according to the first embodiment seen from a direction parallel to the longitudinal axis direction;
Fig. 13 is a schematic sectional view of the air damper according to the first embodiment seen from a direction parallel to the longitudinal axis direction;
Fig. 14 is a schematic sectional view of the air damper according to the first embodiment seen in the longitudinal axis direction;
Fig. 15 is a schematic sectional view of the air damper according to the first embodiment seen in the longitudinal axis direction;
Fig. 16 is a schematic sectional view of the air damper according to the first embodiment seen in the longitudinal axis direction;
Fig. 17 is a schematic sectional view of the air damper according to the first embodiment seen from a direction parallel to the longitudinal axis direction;
Fig. 18 is a schematic sectional view of the air damper according to the first embodiment seen from a direction parallel to the longitudinal axis direction;
Fig. 19 is a schematic sectional view of the air damper according to the first embodiment seen from a direction parallel to the longitudinal axis direction;
Fig. 20 is a schematic top view of a transport apparatus according to a second embodiment;
Fig. 21 is a schematic side view of the transport apparatus according to the second embodiment;
Fig. 22 is a schematic top view of the transport apparatus according to the second embodiment;
Fig. 23 is a schematic side view of the transport apparatus according to the second embodiment;
Fig. 24 is a schematic view of a bar-shaped member and a moving member according to another embodiment;
Fig. 25 is a schematic view of a bar-shaped member and a moving member according to another embodiment;
Fig. 26 is a schematic perspective view of a moving member according to another embodiment; and
Fig. 27 is a schematic sectional view of the moving member according to the other embodiment.

### DESCRIPTION OF THE PREFERRED EMBODIMENTS

Embodiments of the present invention will be described below. In the following drawings, the same or similar elements are denoted by the same or similar reference signs. It should be noted that the drawings are schematic. Accordingly, specific dimensions and the like should be determined with reference to the following description. Of course, the relationships and the ratios of the dimensions may vary among the drawings.

### First Embodiment

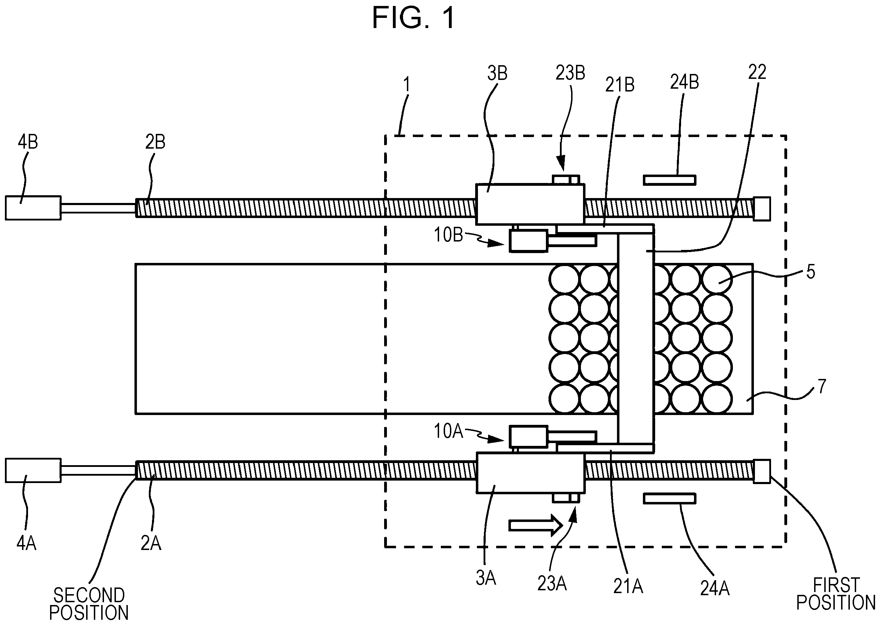

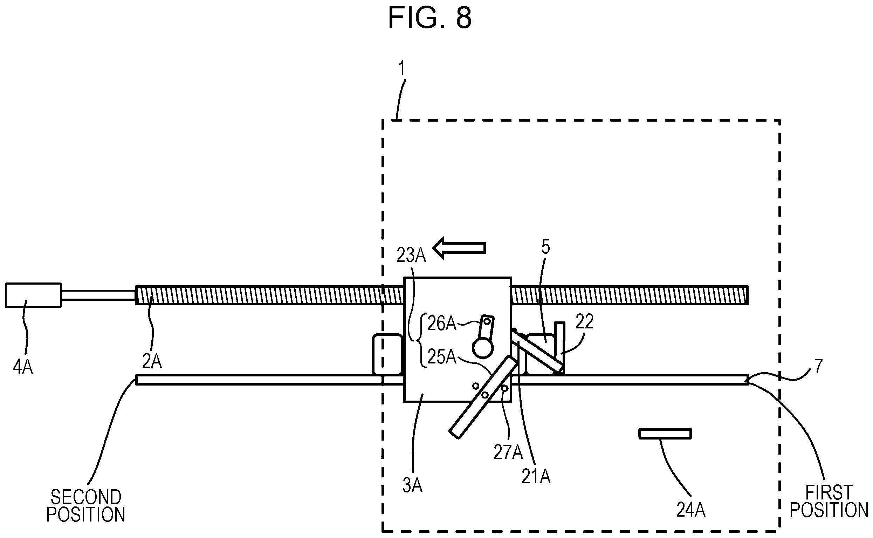

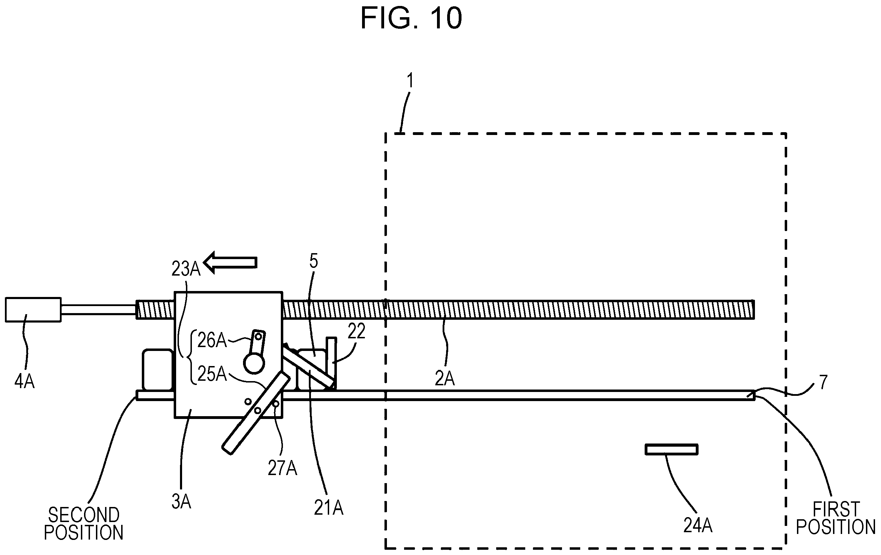

As illustrated in Figs. 1 to 10, a transport apparatus according to a first embodiment includes moving members 3A and 3B, shafts 21A and 21B, a contact member 22, and air dampers 10A and 10B. The moving members 3A and 3B are moved along a table 7 where articles 5 are to be disposed. The shafts 21A and 21 B are rotatably connected to the respective moving members 3A and 3B. The contact member 22 is connected to the shafts 21A and 21 B so as to be brought into contact with the articles 5. The air dampers 10A and 10B attenuate kinetic energy of the contact member 22 and the shafts 21A and 21B while the contact member 22 and the shafts 21A and 21 B are being moved down toward the table 7.

The transport apparatus according to the first embodiment may further include, for example, bar-shaped members 2A and 2B that are disposed parallel to the table 7 and include respective magnetic bodies. The moving members 3A and 3B may each include a portion that includes a magnetic body and faces part of a side surface of a corresponding one of the bar-shaped members 2A and 2B. The transport apparatus may further include drive devices 4A and 4B that rotate the respective bar-shaped members 2A and 2B about the respective central axes of the bar-shaped members 2A and 2B so as to move the moving members 3A and 3B along the respective bar-shaped members 2A and 2B. The moving members 3A and 3B are moved along the table 7 in a range between a first position and a second position.

The transport apparatus according to the first embodiment further includes inhibiting mechanisms 23A and 23B and dogs 24A and 24B. The inhibiting mechanisms 23A and 23B are respectively provided in the moving members 3A and 3B and inhibit rotation of the shafts 21A and 21B, thereby to hold the contact member 22 above the articles 5. The dogs 24A and 24B are brought into contact with the respective inhibiting mechanisms 23A and 23B at specified positions so as to release the inhibition of the rotation of the shafts 21A and 21B, the inhibition being performed by the inhibiting mechanisms 23A and 23B, thereby allowing the contact member 22 to move down toward the table 7.

At least part of the first position side of each of the bar-shaped members 2A and 2B is disposed in a chamber 1. The chamber 1 is, for example, a temperature controlled chamber having a space in which the articles 5 are to be disposed and the temperature of which is controlled. The temperature controlled chamber may be, for example, a freeze drying chamber. The articles 5 are, for example, vials or the like into which pharmaceuticals are injected. When the chamber 1 is a freeze drying chamber, the articles 5 are to be disposed on the table 7 in the chamber, so that the pharmaceuticals or the like in the articles 5 are to be freeze dried. The table 7 is, for example, a shelf board. A heat sterilizer may be provided in the chamber 1.

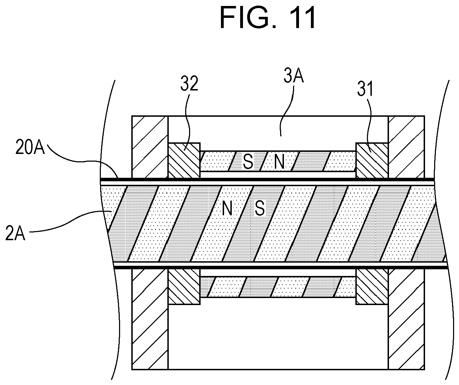

The cylindrical bar-shaped member 2A is held by a bearing. As illustrated in Fig. 11, the bar-shaped member 2A is a magnetic screw that includes a hard magnetic body and that has an outer circumferential surface on which a helical S-pole magnetized zone and a helical N-pole magnetized zone are disposed parallel to each other. The bar-shaped member 2A may be inserted into a non-magnetic thin pipe 20A of a body. The pipe 20A is formed of, for example, stainless steel. The bar-shaped member 2A and the pipe 20A are integrated with each other, so that, when the bar-shaped member 2A is rotated, the pipe 20A is also rotated about the central axis of the bar-shaped member 2A.

The moving member 3A includes a magnetic nut including a hard magnetic body and has a hole having a larger inner circumference than an outer circumference of the bar-shaped member 2A. The bar-shaped member 2A is inserted through the nut-shaped hole of the moving member 3A. A helical S-pole magnetized zone and a helical N-pole magnetized zone are disposed parallel to each other on an inner circumferential surface of the moving member 3A. The pitch of the magnetized zones of the moving member 3A is substantially the same as the pitch of the magnetized zones of the bar-shaped member 2A. Guide rings 31 and 32 such as bushings may be provided at the inner circumferential surface of the moving member 3A. The inner circumferences of the guide rings 31 and 32 are each smaller than the inner circumference of the moving member 3A and is in contact with the outer circumference of the pipe 20A. Thus, a gap of a certain distance is maintained between the magnetized zones of the bar-shaped member 2A and the magnetized zones of the moving member 3A. The guide rings 31 and 32 are formed of a material having a small coefficient of friction such as, for example, a fluorocarbon polymer.

As illustrated in Fig. 1, the cylindrical bar-shaped member 2B is held by a bearing such that the bar-shaped member 2B is parallel to the bar-shaped member 2A. The structure of the bar-shaped member 2B is the same as or similar to that of the bar-shaped member 2A. The structure of the moving member 3B is the same as or similar to that of the moving member 3A.

The drive devices 4A and 4B include, for example, rotating motors and are disposed outside a temperature controlled space of the chamber 1. The drive devices 4A and 4B may be disposed outside a housing of the chamber 1 or at respective positions that are in the housing of the chamber 1 and outside the temperature controlled space. The drive devices 4A and 4B may be covered with a shield or the like that prevents dispersion of dust or the like that may be generated. The drive device 4A and the second position side of the bar-shaped member 2A are connected to each other by, for example, a core rod. Also, the drive device 4B and the second position side of the bar-shaped member 2B are connected to each other through, for example, a core rod.

The drive devices 4A and 4B are in synchronization with each other to rotate the bar-shaped members 2A and 2B. When the drive device 4A rotates the bar-shaped member 2A, magnetic forces act between the magnetized zones of the bar-shaped member 2A and the magnetized zones of the moving member 3A. The moving member 3A, which is connected to the moving member 3B through the shafts 21A and 21B and the contact member 22, cannot be rotated. Thus, when the bar-shaped member 2A is rotated, the moving member 3A is moved along the central axis of the bar-shaped member 2A. Furthermore, when the drive device 4B rotates the bar-shaped member 2B, magnetic forces act between the magnetized zones of the bar-shaped member 2B and the magnetized zones of the moving member 3B, thereby the moving member 3B is moved along the central axis of the bar-shaped member 2B. Along with the movements of the moving members 3A and 3B, the shafts 21A and 21B and the contact member 22 connected between the moving members 3A and 3B are also moved along the central axes of the bar-shaped members 2A and 2B.

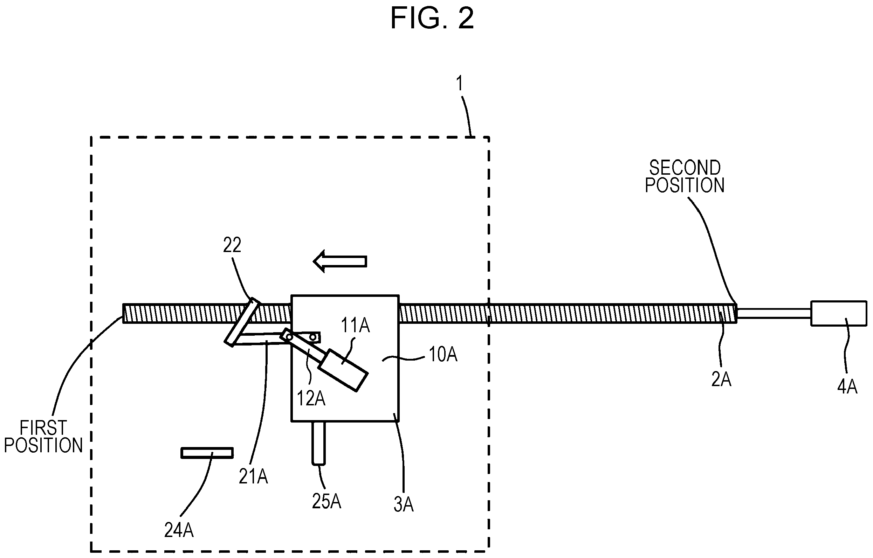

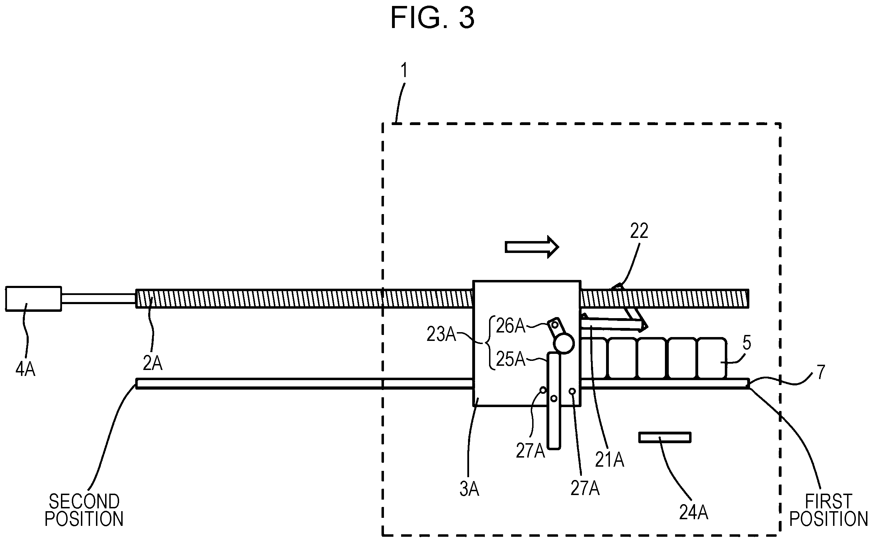

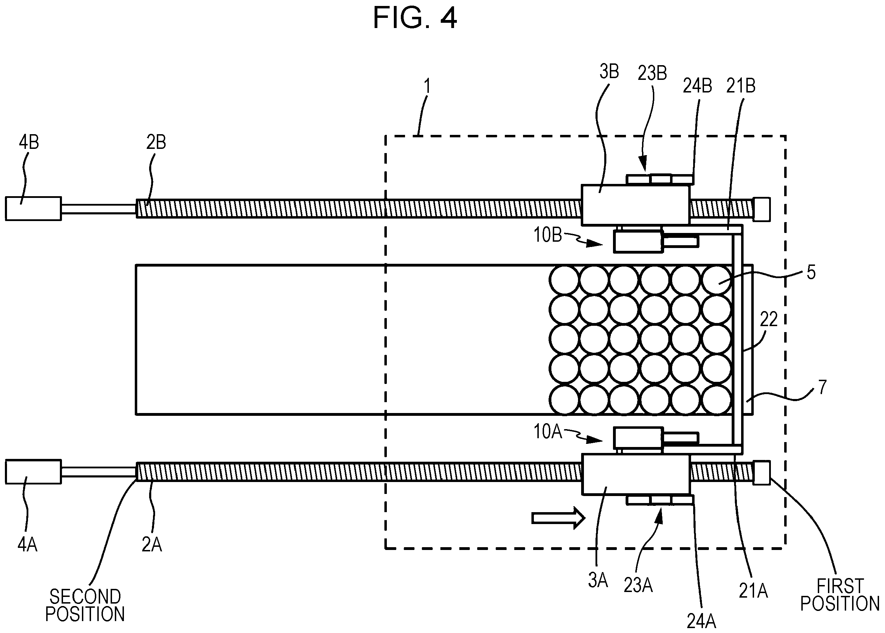

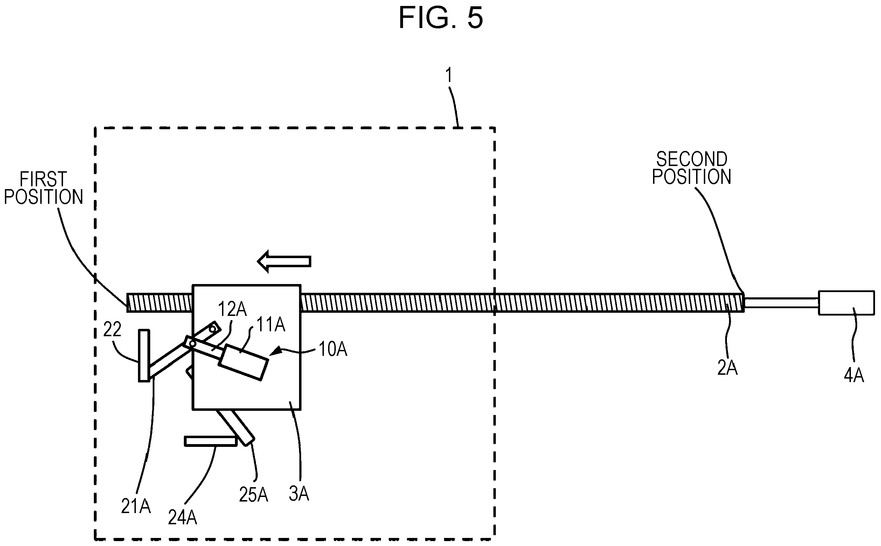

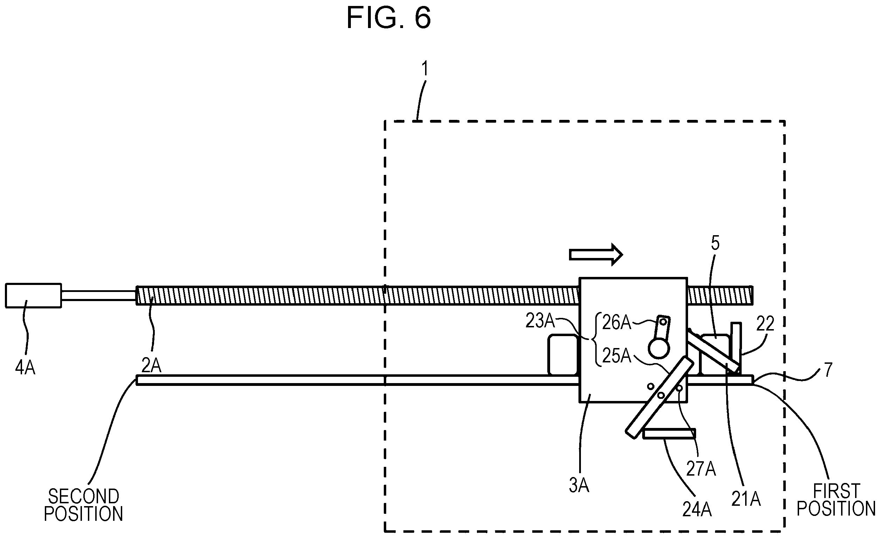

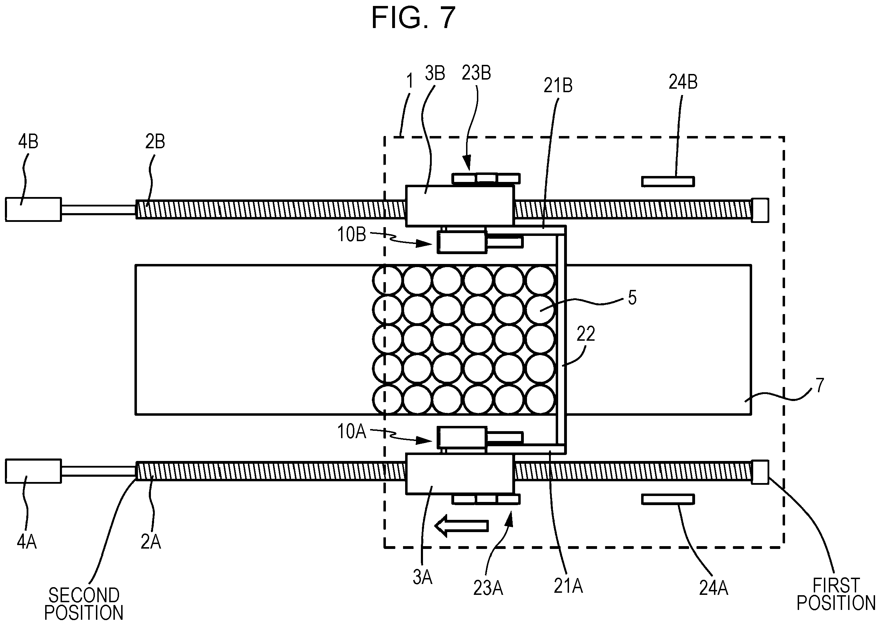

The contact member 22 is, for example, a plate-shaped or bar-shaped member. The articles 5 in the chamber are transported to the outside of the chamber 1 as follows: as illustrated in Fig. 1, Fig. 2 that is a side view seen from the table 7 side, and Fig. 3 that is a side view seen from the opposite side to the table 7, the contact member 22 connected to the moving members 3A and 3B passes through a region above the articles 5 toward the first position to a rear region of the chamber 1; as illustrated in Fig. 4, Fig. 5 that is a side view seen from the table 7 side, and Fig. 6 that is a side view seen from the opposite side to the table 7, the contact member 22 is moved down toward the table 7 in the rear region of the chamber 1; and after that, as illustrated in Figs. 7 to 10, the contact member 22 is brought into contact with the articles 5 and pushes the articles 5 toward the second position, thereby transporting the articles 5 to the outside of the chamber 1.

As illustrated in Fig. 1, the shaft 21A that holds the contact member 22 at one end portion is connected to the moving member 3A such that the shaft 21A is rotatable, for example, in a plane that is perpendicular to the surface of the table 7 and parallel to the central axis direction of the bar-shaped member 2A. The shaft 21B that holds the contact member 22 at the other end portion is connected to the moving member 3B such that, for example, the shaft 21B is rotatable in a plane that is perpendicular to the surface of the table 7 and parallel to the central axis direction of the bar-shaped member 2B.

As illustrated in Figs. 1 and 3, the inhibiting mechanism 23A provided in the moving member 3A inhibits the rotation of the shaft 21A so as to hold the contact member 22 above the articles 5 while the moving member 3A is moving toward the first position in the rear region of the chamber 1. As illustrated in Fig. 3, the inhibiting mechanism 23A includes, for example, a first rotating member 25A and a second rotating member 26A. The first rotating member 25A is rotated when pushed by the dog 24A that is disposed at a specified position. The second rotating member becomes rotatable when the first rotating member 25A is rotated. The first rotating member 25A and the second rotating member 26A are rotated in a plane that is perpendicular to the surface of the table 7 and parallel to the central axis direction of the bar-shaped member 2A.

The shaft 21A is connected to the second rotating member 26A. For example, the shaft 21A and the second rotating member 26A share a rotational shaft. While the moving member 3A is moving toward the first position at the rear region of the chamber 1, the second rotating member 26A is held by the first rotating member 25A and unable to be rotated. As illustrated in Figs. 4 to 6, for example, along with the movement of the moving member 3A, at the rear region of the chamber 1, the first rotating member 25A is pushed by the dog 24A secured at the specified position, rotated, and separated from the second rotating member 26A with which the first rotating member 25A has been in contact. The second rotating member 26A having been released from the inhibition of rotation by the first rotating member 25A is rotated due to gravity exerted on the shaft 21A and the contact member 22. Thus, the shaft 21A and the contact member 22 are moved down toward the table 7. In so doing, the kinetic energy of the contact member 22 and the shafts 21A and 21B is attenuated by the air dampers 10A and 10B illustrated in Figs. 4 and 5, thereby a crash force of the contact member 22 against the table 7 is reduced.

The shapes of the first rotating member 25A and the second rotating member 26A illustrated in Fig. 6 are not particularly limited. The first rotating member 25A and the second rotating member 26A may have a rocker arm shape or a cam shape that at least has an elongated portion. The second rotating member 26A having been released from the inhibition of rotation by the first rotating member 25A is rotated so as to pass through, for example, the bottom dead center. The dog 24A has any shape as long as the dog 24A can cause the first rotating member 25A to rotate at the specified position.

The rotational shaft of the first rotating member 25A may have rotational resistance that allows the rotational shaft of the first rotating member 25A to rotate when the first rotating member 25A is pushed by the dog 24A. Furthermore, the first rotating member 25A may have a weight that allows the first rotating member 25A to rotate when the first rotating member 25A is pushed by the dog 24A. The rotational resistance of the rotational shaft of the second rotating member 26A may be lower than the rotational resistance of the rotational shaft of the first rotating member 25A. The amount of rotation of the second rotating member 26A that becomes rotatable may be larger than the amount of rotation of the first rotating member 25A pushed by the dog 24A. The moving member 3A may be provided with a rotational angle regulators 27A that regulate the rotational angle of the first rotating member 25A.

The inhibiting mechanism 23B provided in the moving member 3B illustrated in Fig. 4 has a structure that is the same as or similar to the structure of the inhibiting mechanism 23A provided in the moving member 3A. The inhibiting mechanism 23B is brought into contact with the dog 24B at the specified position so as to allow the shaft 21 B to be rotated. The dog 24A and the dog 24B are disposed at the same position in the central axis direction of the bar-shaped members 2A and 2B.

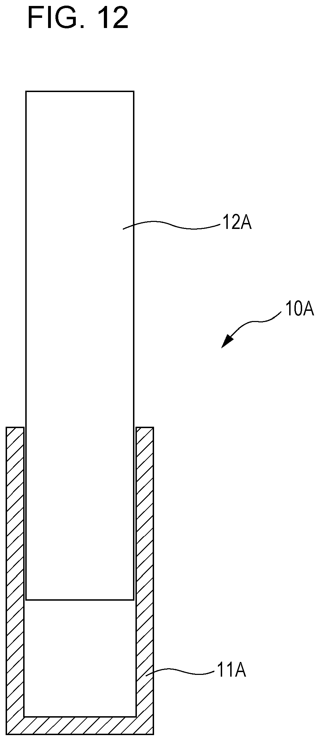

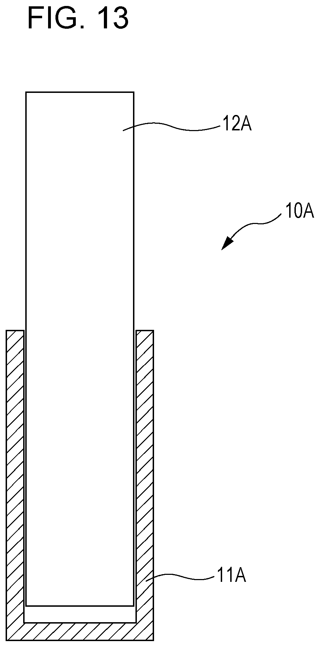

The air damper 10A illustrated in Fig. 5 includes a piston rod 12A and a cylinder 11A. The piston rod 12A is rotatably connected to the shaft 21A. The cylinder 11A contains at least part of the piston rod 12A. The cylinder 11A is rotatably connected to the moving member 3A. While the contact member 22 and the shaft 21A are being moved down toward the table 7, the piston rod 12A is pushed by the shaft 21A, thereby, as illustrated in Figs. 12 and 13, the piston rod 12A is moved toward a closed end portion of the cylinder 11A.

When the piston rod 12A is moved toward the closed end portion of the cylinder 11A and an end portion of the piston rod 12A approaches the closed end portion of the cylinder 11A, the air pressure in the cylinder 11A becomes higher than the air pressure outside the cylinder 11A. Accordingly, the gas in the cylinder 11A flows to the outside of the cylinder 11A through, for example, an orifice between a side wall of the piston rod 12A and an inner wall of the cylinder 11A formed due to fit tolerance of the piston rod 12A and the cylinder 11A. Thus, since the piston rod 12A is moved toward the closed end portion of the cylinder 11A while being subjected to viscous drag of the gas, the moving speed of the piston rod 12A is reduced. This reduction in speed of the piston rod 12A leads to reduction in speed of the shaft 21A connected to the piston rod 12A.

The temperature in the chamber 1 illustrated in Fig. 1 may be increased for sterilization and decreased for freeze drying the articles 5. Thus, the cylinder 11A and the piston rod 12A illustrated in Fig. 12 may be exposed to high temperatures and low temperatures. Here, when the coefficient of linear expansion of the cylinder 11A is the same as the coefficient of linear expansion of the piston rod 12A, the orifice between the side wall of the piston rod 12A and the inner wall of the cylinder 11A can be maintained at a fixed size even when the ambient temperature changes.

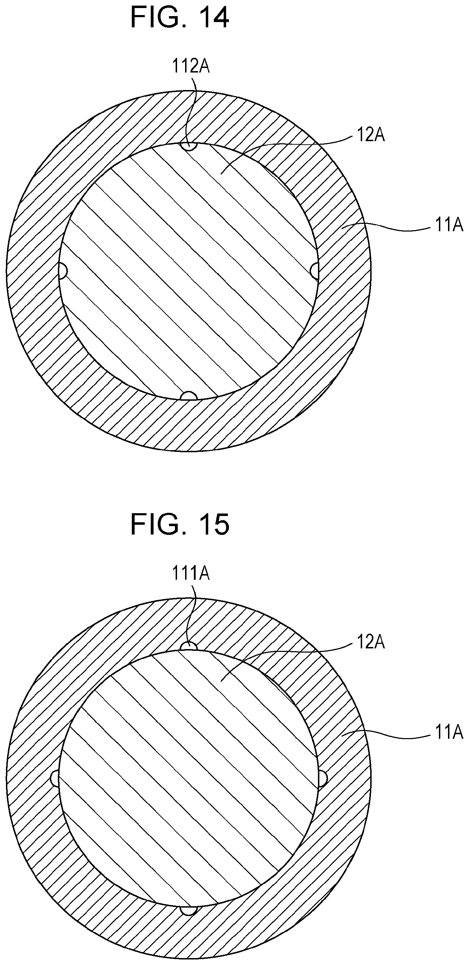

As illustrated in Fig. 14, grooves 112A may be provided in a side surface of the piston rod 12A. In this case, the gas in the cylinder 11A flows to the outside of the cylinder 11A through the grooves 112A. Alternatively, as illustrated in Fig. 15, grooves 111A may be provided in the inner wall of the cylinder 11A. In this case, the gas in the cylinder 11A flows to the outside of the cylinder 11A through the grooves 111A.

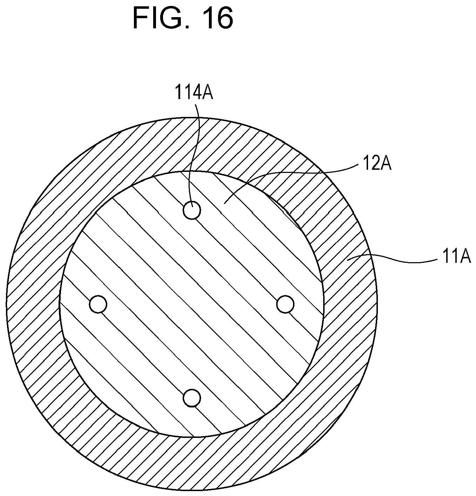

As illustrated in Fig. 16, the piston rod 12A may have holes 114A that penetrate therethrough. In this case, the gas in the cylinder 11A flows to the outside of the cylinder 11A through the holes 114A provided in the piston rod 12A while the piston rod 12A is being moved toward the closed end portion of the cylinder 11A.

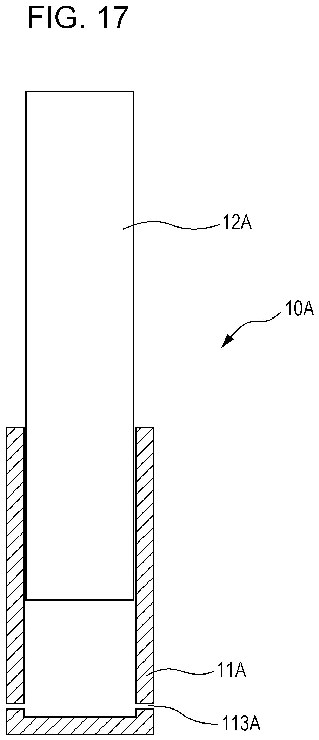

Alternatively, as illustrated in Fig. 17, the cylinder 11A may have holes 113A that penetrate through a side wall of the cylinder 11A. In this case, the gas in the cylinder 11A flows to the outside of the cylinder 11A through the holes 113A provided in the cylinder 11A while the piston rod 12A is being moved toward the closed end portion of the cylinder 11A.

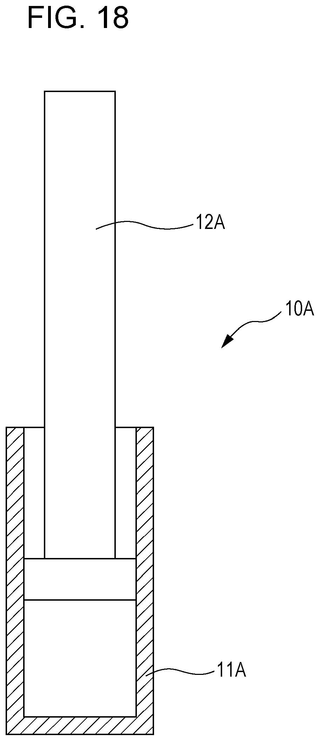

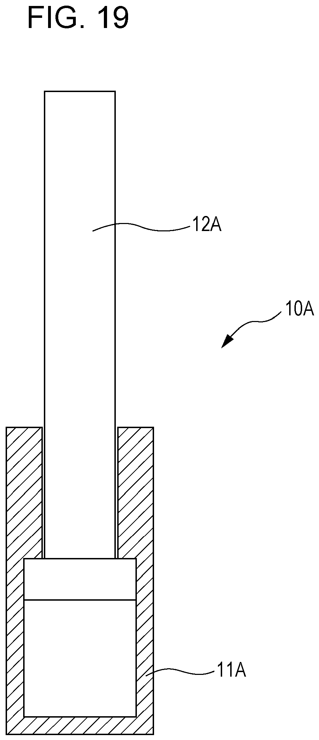

As illustrated in Fig. 18, the piston rod 12A may include a rod portion having a small diameter and a piston portion having a large diameter. Furthermore, as illustrated in Fig. 19, the inner diameter of the cylinder 11A may be approximately the same as the outer diameter of the piston portion of the piston rod 12A on the closed end side and approximately the same as the outer diameter of the rod portion of the piston rod 12A on the open end side.

The air damper 10B illustrated in Fig. 1 has a structure that is the same as or similar to the structure of the air damper 10A.

After the shafts 21A and 21B and the contact member 22 have been moved down toward the table 7 as illustrated in Figs. 4 to 6, the moving members 3A and 3B are moved toward the second position outside the chamber 1 and separated from the dogs 24A and 24B as illustrated in Figs. 7 to 10. In so doing, the articles 5 on the table 7 are pushed by the contact member 22, thereby being transported to the outside of the chamber 1. After the articles 5 have been transported, the shafts 21A and 21B and the contact member 22 may be moved upward to a specified height by a robot arm or a hand of an operator so as to inhibit rotation of the shafts 21A and 21B by using the inhibiting mechanisms 23A and 23B.

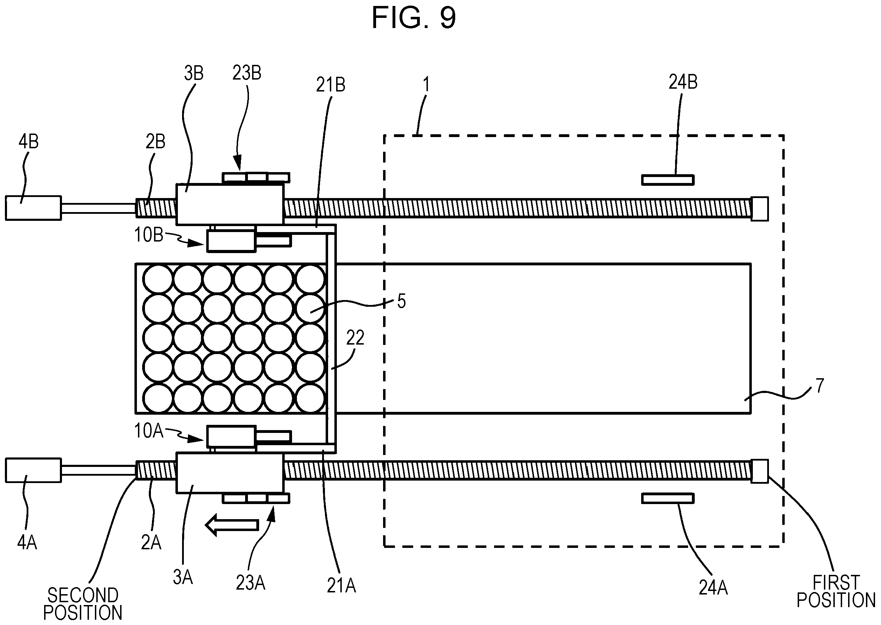

After the articles 5 have been transported as illustrated in Fig. 9, the shafts 21A and the contact member 22 may be moved upward to a specified height as illustrated in Fig. 3 by a robot arm or a hand of an operator so as to inhibit rotation of the shafts 21A with the inhibiting mechanisms 23A.

Alternatively, when the center of gravity of the first rotating member 25A is set below the rotational shaft of the first rotating member 25A, a moment is applied to the first rotating member 25A to return the first rotating member 25A into a position parallel to the direction of gravity as illustrated in Fig. 3. In this case, moving up only the shaft 21A causes the first rotating member 25A to naturally return into a position where the first rotating member 25A inhibits the shaft 21A from rotating.

Since the structure of the transport apparatus according to the first embodiment having been described is not complex, the amount of dust generated while the contact member 22 is being moved down is small. Accordingly, it is possible to keep the inside of the chamber clean. Also, the maintenance of the chamber 1 and the transport apparatus is easy. Furthermore, since the structure is not complex, it is possible to suppress remaining of a washing solution after washing has been performed. Furthermore, in the transport apparatus according to the first embodiment, the contact member 22 is moved down by utilizing gravity. Accordingly, it is not necessary to move the motors into the chamber 1 for moving down the contact member 22 into the chamber 1. Thus, the temperature inside the chamber 1 is not increased by heat generation by the motors.

Furthermore, in the transport apparatus according to the first embodiment, drive transmission between the bar-shaped members 2A and 2B and the moving members 3A and 3B is performed by magnetic forces in a non-contact manner. This reduces likelihood of heat or dust being generated during drive transmission between the bar-shaped members 2A and 2B and the moving members 3A and 3B. Thus, even when the bar-shaped members 2A and 2B and the moving members 3A and 3B are disposed in the temperature controlled space of the chamber 1, the inside of the temperature controlled space is unlikely to be affected by heat or dust.

Furthermore, when the air dampers 10A and 10B are not provided, the contact member 22 may crash onto the table 7 with a strong force. This may generate loud sounds or cause damage to components of the transport apparatus and the articles 5. Furthermore, when oil dampers are used, the oil dampers are unlikely to endure both a high-temperature environment for sterilization and a low-temperature environment for freeze drying. Furthermore, when the articles 5 are pharmaceuticals or the like, leakage of oil from the oil dampers is not allowed. When a cushioning member such as a rubber stopper or the like is disposed at the bottom surface of the contact member 22, the cushioning member cannot reduce energy of the contact member 22 while the contact member 22 is being moved down toward the table 7. Furthermore, when the cushioning member is deformed, it is difficult to move down the contact member 22 to a specified position. Furthermore, when a cushioning member such as a rubber stopper is used, fragments of rubber or the like may scatter as foreign matter.

In contrast, the transport apparatus according to the first embodiment, which includes the air dampers 10A and 10B, can suppress crashing of the contact member 22 onto the table 7 with a large force. Furthermore, the air dampers 10A and 10B can endure both the high-temperature environment for sterilization and the low-temperature environment for freeze drying. Furthermore, there is no possibility of scattering of foreign matter such as oil or fragments of rubber from the air dampers 10A and 10B.

### Second Embodiment

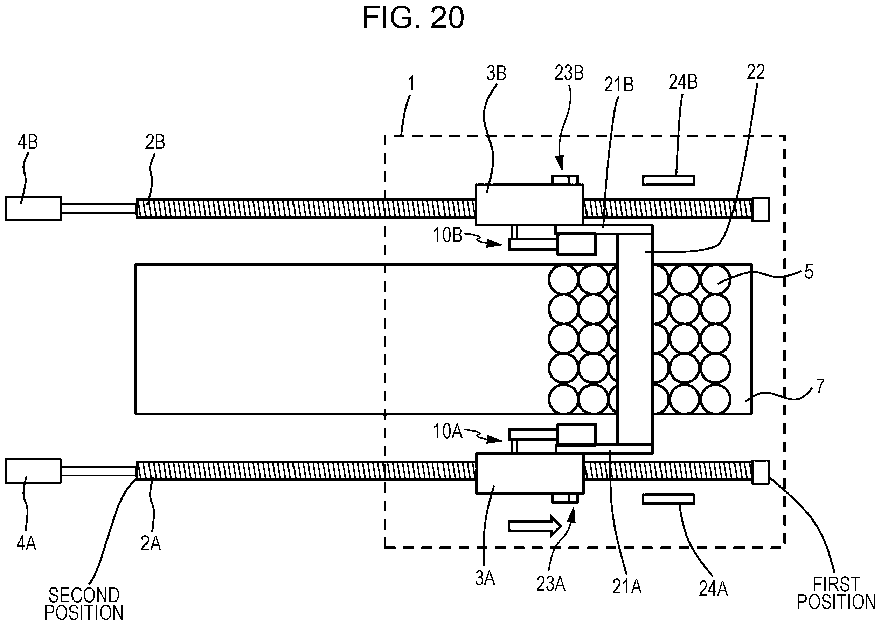

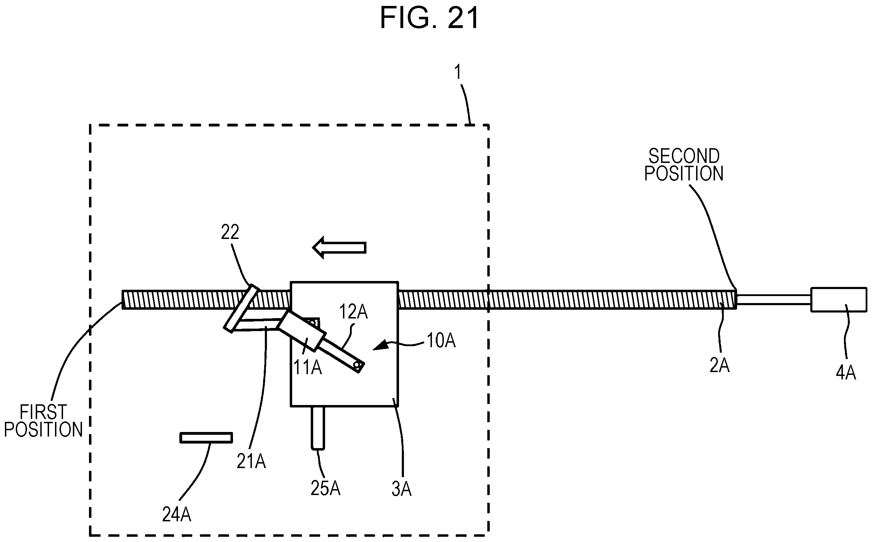

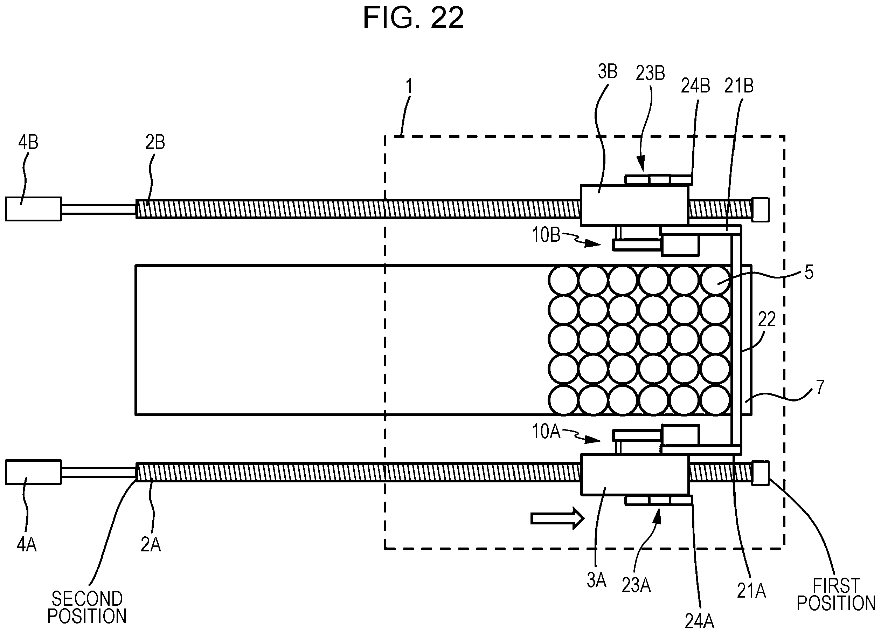

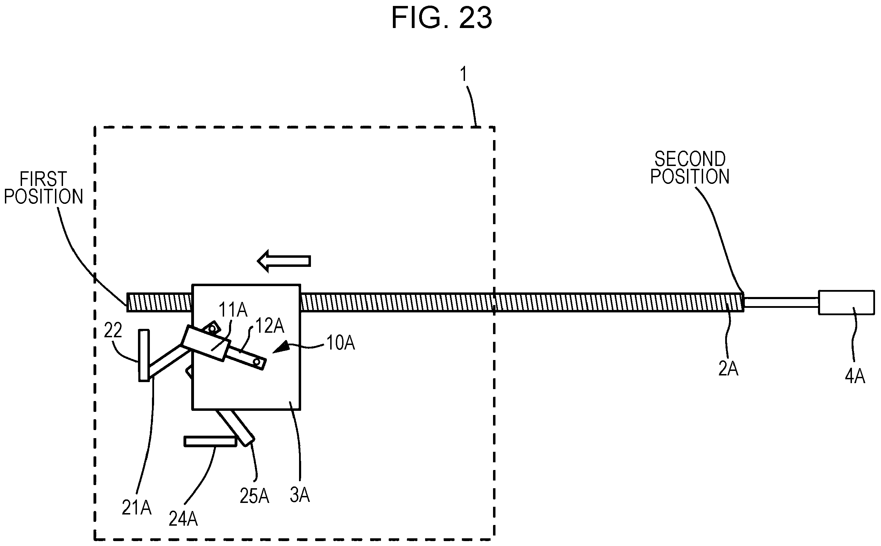

As illustrated in Figs. 20 to 23, in the transport apparatus according to a second embodiment, the air damper 10A includes the cylinder 11A rotatably connected to the shaft 21A and the piston rod 12A at least part of which is contained in the cylinder 11A. The piston rod 12A is rotatably connected to the moving member 3A. While the contact member 22 and the shafts 21A and 21B are being moved down toward the table 7, the closed end portion of the cylinder 11A is moved toward the end of the piston rod 12A.

The air damper 10B has a structure that is the same as or similar to the structure of the air damper 10A. Other elements of the transport apparatus according to the second embodiment are the same as or similar to those of the transport apparatus according to the first embodiment. Also with the transport apparatus according to the second embodiment, the kinetic energy of the contact member 22 and the shafts 21A and 21B is attenuated, thereby the crash force of the contact member 22 against the table 7 is reduced.

### Other Embodiments

Although the present invention is described with the embodiments as above, it should be understood that the description and the drawings as part of the present disclosure do not limit the present invention. A variety of alternative embodiments, examples, and operational techniques will be apparent to those skilled in the art from the present disclosure.

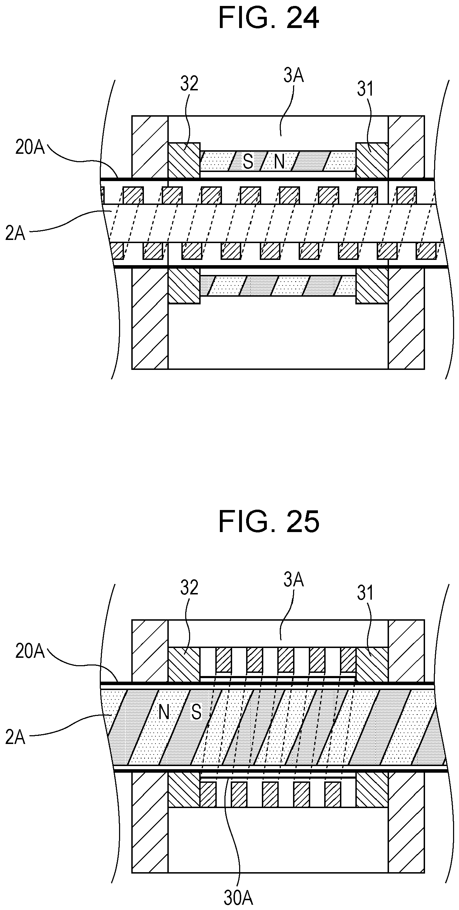

For example, the structures of the bar-shaped member 2A and the moving member 3A are not limited to the examples illustrated in Fig. 11. For example, as illustrated in Fig. 24, the bar-shaped member 2A may be a soft magnetic body having a thread ridge. The structure of the moving member 3A is the same as or similar to the structure illustrated in Fig. 11. The pitch of the thread ridge of the bar-shaped member 2A illustrated in Fig. 24 is substantially the same as the pitch of the magnetized zones of the moving member 3A. The bar-shaped member 2A having the thread ridge may be inserted into the non-magnetic thin pipe 20A. This can prevent foreign matter from adhering to a thread groove of the bar-shaped member 2A. When the bar-shaped member 2A is rotated, magnetic forces act between the thread ridge of the bar-shaped member 2A and the magnetized zones of the moving member 3A, thereby the moving member 3A is moved.

Alternatively, as illustrated in Fig. 25, the moving member 3A may include a soft magnetic body having a thread ridge. The surface of a recess of the moving member 3A where the thread ridge is provided may be covered with a non-magnetic thin pipe 30A. This can prevent foreign matter from adhering to a thread groove of the moving member 3A. The structure of the bar-shaped member 2A is the same as or similar to the structure illustrated in Fig. 11. The pitch of the thread ridge of the moving member 3A illustrated in Fig. 25 is substantially the same as the pitch of the magnetized zones of the bar-shaped member 2A. When the bar-shaped member 2A is rotated, magnetic forces act between the magnetized zones of the bar-shaped member 2A and the thread ridge of the moving member 3A, thereby the moving member 3A is moved.

Furthermore, for example, the articles to be transported into or from the chamber are not limited to articles including pharmaceuticals. Examples of the articles may include, for example, food, beverages, and precision components, and any other article. Furthermore, the chamber is not limited to a freeze drying chamber. The chamber may be a fermentation chamber or any kind of chamber for which suppression of an uneven distribution of an inner temperature and generation of dust is desired. Furthermore, the shape of the moving member is not limited to a nut shape. The shape of the moving member may be a recess shape. In this case, the bar-shaped member is moved in a recess of a recess-shaped moving member. An S-pole magnetized zone and an N-pole magnetized zone are disposed parallel to each other on a side surface of the recess of the recess-shaped moving member.

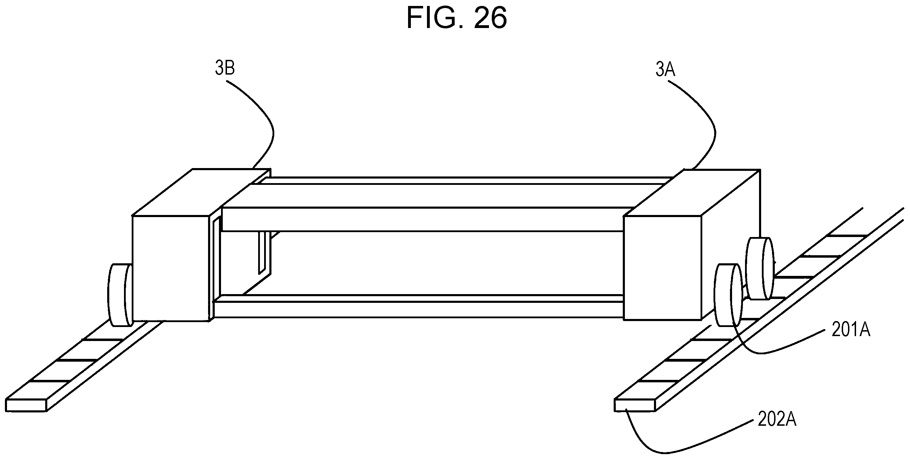

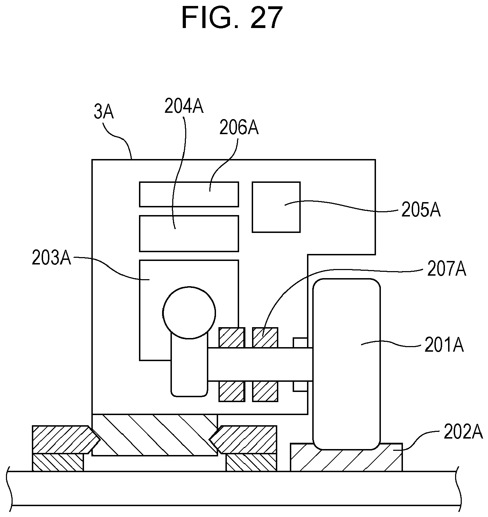

Furthermore, it is not limited that the moving members 3A and 3B are driven by magnetic screws. For example, as illustrated in Figs. 26 and 27, the moving member 3A may be able to be self propelled and include wheels 201A rotatable on a track 202A and a drive device 203A that rotates the wheels 201A. Shafts of the wheels 201A may be held by bearings 207A. The drive device 203A may be controlled by a controller 204A. Furthermore, content of control performed by the controller 204A may be remotely indicated from the outside through a receiver 205A. Furthermore, the moving member 3A may include therein a battery 206A that supplies power to the drive device 203A and so force.

As has been described, it should be understood that the present invention includes various embodiments and so forth not described herein.

### DESCRIPTION OF REFERENCE SIGNS

1: chamber
2A, 2B: bar-shaped member
3A, 3B: moving member
4A, 4B: drive device
5: article
7: table
10A, 10B: air damper
11A: cylinder
12A: piston rod
20A, 30A: pipe
21A, 21B: shaft
22: contact member
23A, 23B: inhibiting mechanism
24A, 24B: dog
25A: first rotating member
26A: second rotating member
27A: rotational angle regulator
31, 32: guide ring
111A, 112A: groove
113A, 114A: hole
201A: wheel
202A: track
203A: drive device
204A: controller
205A: receiver
206A: battery
207A: bearing

## Claims

1. A transport apparatus comprising:
a moving member (3A, 3B) that is moved along a table where an article is to be disposed;
a shaft (21A, 21B) rotatably connected to the moving member (3A, 3B);
a contact member (22) that is connected to the shaft (21A, 21B) and that is to be brought into contact with the article; and
an air damper (10A, 10B) that attenuates kinetic energy of the contact member (22) and the shaft (21A, 21B) while the contact member (22) and the shaft (21A, 21B) are being moved down toward the table.

2. The transport apparatus according to Claim 1, further comprising:
an inhibiting mechanism (23A, 23B) that is provided in the moving member (3A, 3B) and that inhibits rotation of the shaft (21A, 21B) so as to hold the contact member (22) above the article; and
a dog (24A, 24B) that is brought into contact with the inhibiting mechanism (23A, 23B) at a specified position so as to release inhibition of the rotation of the shaft (21A, 21 B), the inhibition being performed by the inhibiting mechanism (23A, 23B), thereby allowing the contact member (22) to be moved down toward the table,
wherein the shaft (21A, 21B) having been released from the inhibition of the rotation, the inhibition being performed by the inhibiting mechanism (23A, 23B), is rotated due to gravity applied to the shaft (21A, 21B) and the contact member (22).

3. The transport apparatus according to Claim 1 or 2,
wherein the air damper (10A, 10B) includes
a piston rod (12A) rotatably connected to the shaft (21A, 21B), and
a cylinder (11A) that contains at least part of the piston rod (12A),
wherein the piston rod (12A) is moved toward a closed end portion of the cylinder (11A) while the contact member (22) and the shaft (21A, 21B) are being moved down toward the table.

4. The transport apparatus according to Claim 3,
wherein the cylinder (11A) is rotatably connected to the moving member (3A, 3B).

5. The transport apparatus according to Claim 1 or 2,
wherein the air damper (10A, 10B) includes
a cylinder (11A) rotatably connected to the shaft (21A, 21B), and
a piston rod (12A) at least part of which is contained in the cylinder (11A), and
wherein a closed end portion of the cylinder (11A) is moved toward an end portion of the piston rod (12A) while the contact member (22) and the shaft (21A, 21B) are being moved down toward the table.

6. The transport apparatus according to Claim 5,
wherein the piston rod (12A) is rotatably connected to the moving member (3A, 3B).

7. The transport apparatus according to Claim 3 or 5,
wherein, while an end portion of the piston rod (12A) is approaching or being approached by the closed end portion of the cylinder (11A), a gas in the cylinder (11A) flows out of the cylinder (11A) through an orifice between the piston rod (12A) and the cylinder (11A).

8. The transport apparatus according to Claim 7,
wherein a groove (111A, 112A) is provided in at least one of a side surface of the piston rod (12A) and an inner wall of the cylinder (11A).

9. The transport apparatus according to Claim 3 or 5,
wherein a hole (113A, 114A) is provided in at least one of the piston rod (12A) and the cylinder (11A), and
wherein, while an end portion of the piston rod (12A) is approaching or being approached by the closed end portion of the cylinder (11A), a gas in the cylinder (11A) flows out of the cylinder (11A) through the hole (113A, 114A).

10. The transport apparatus according to any one of Claims 3, 5, 7, and 9,
wherein a coefficient of linear expansion of the cylinder (11A) is identical to a coefficient of linear expansion of the piston rod (12A).
